# EUROPEAN PATENT APPLICATION

(11) **EP 4 451 379 A1**
(43) Date of publication of application: **23.10.2024**
(21) Application number: 23891963.3
(22) Date of filing: 14.11.2023
(51) Int. Cl.: H01M 4/36, H01M 4/38, H01M 4/62, H01M 4/139, H01M 10/052, H01M 4/02

(54) **POSITIVE ELECTRODE FOR LITHIUM-SULFUR BATTERY, METHOD FOR PRODUCING SAME, AND LITHIUM-SULFUR BATTERY COMPRISING SAME**

(30) Priority: 14.11.2022 KR 20220151291
(71) Applicant: LG Energy Solution, Ltd., Seoul 07335 (KR)
(72) Inventor: CHO, Hyunah, Daejeon 34122 (KR); KANG, Da Young, Daejeon 34122 (KR); YANG, Seungbo, Daejeon 34122 (KR)
(74) Representative: Goddar, Heinz J.
(86) International application number: PCT/KR2023/018227
(87) International publication number: WO 2024/106896

(57) **Abstract**

The present invention relates to a positive electrode for a lithium-sulfur battery comprising a sulfur-carbon composite comprising a porous carbon material having a particle size (based on D10) of less than 10 µm and sulfur on at least some of the inner and outer surfaces of the porous carbon material, with a porosity of more than 75% and 85% or less.

## Description

### [Technical Field]

The present application claims the benefit and priority to Korean Patent Application No. 10-2022-0151291, filed November 14, 2022, and Korean Patent Application No. 10-2023-0156911, filed November 14, 2023, the disclosure of which is incorporated herein by reference in its entirety.

The present invention relates to a positive electrode for a lithium-sulfur battery, a method of manufacturing the same, and a lithium-sulfur battery comprising the same.

### [Related Art]

In recent years, there has been a growing interest in energy storage technologies. With applications in cell phones, camcorders and notebook PCs, and even energy for electric vehicles, research and development efforts in electrochemical devices are becoming increasingly concrete.

Electrochemical devices are receiving the most attention in this regard, and among them, the development of rechargeable secondary batteries is the focus of attention, and in recent years, research and development on new electrode and battery designs have been conducted to improve capacity density and energy efficiency in the development of such batteries.

Among the currently applied secondary batteries, lithium secondary batteries, developed in the early 1990s, are gaining attention for their high operating voltage and much higher energy density compared to conventional batteries such as Ni-MH, Ni-Cd, and lead-sulfate batteries that use aqueous electrolyte solutions.

In particular, lithium-sulfur (Li-S) batteries are secondary batteries that use sulfur-based substances with sulfur - sulfur bonds as the positive electrode active material and lithium metal as the negative electrode active material. Sulfur, the main material of the positive electrode active material, has the advantages of being very abundant, non-toxic, and having a low weight per atom. In addition, since the theoretical discharge capacity of the lithium-sulfur battery is 1675mAh/g-sulfur, and the theoretical energy density is 2,600Wh/kg, which is very high compared to the theoretical energy density of other battery systems currently being studied (Ni-MH battery: 450Wh/kg, Li-FeS battery: 480Wh/kg, Li-MnOz battery: 1,000Wh/kg, Na-S battery: 800Wh/kg), the lithium-sulfur battery is the most promising battery among batteries currently being developed.

During the discharge reaction of a lithium-sulfur battery, an oxidation reaction of lithium occurs at the negative electrode, and a reduction reaction of sulfur occurs at the positive electrode. Before discharge, sulfur has an annular S₈ structure, and the oxidation number of S decreases as the S-S bond is broken during the reduction reaction (discharge), and the oxidation number of S increases by the oxidation-reduction reaction as the S-S bond is re-formed during the oxidation reaction (charge), thereby storing and generating electrical energy. During this reaction, sulfur is converted from the annular S₈ to the linear structure of lithium polysulfide (Li₂Sₓ, where x is 8, 6, 4 or 2) by a reduction reaction, and eventually lithium sulfide (Li₂S) is produced when the lithium polysulfide is completely reduced. The discharge behavior of lithium-sulfur batteries is characterized by a stepwise discharge voltage, unlike lithium ion batteries, due to the process of reducing to each lithium polysulfide.

In order to improve the performance of these lithium-sulfur batteries, it is necessary to maximize the reactivity of the positive electrode active material. Since the sulfur used as the positive electrode active material in lithium-sulfur batteries is not conductive, carbon materials are used as carriers to maximize reactivity, and sulfur-carbon composites containing a mixture of carbon materials and sulfur are mainly used.

In the sulfur-carbon composite, mixing carbon materials with high specific surface area and porosity with sulfur can increase the amount of sulfur retention, which can improve the energy density of lithium-sulfur batteries, but there is a problem that the reactivity is reduced and the discharge capacity is reduced, so it is necessary to improve it.

The particle size of the carbon material is a factor that greatly affects the discharge capacity and energy density of lithium-sulfur batteries, and if the carbon material contains fine particles, the porosity of the positive electrode cannot be secured, resulting in a decrease in the reactivity of the lithium-sulfur battery. Therefore, it is necessary to use carbon materials that do not contain fine particles, but it is not easy to control the fine particles due to the low density of carbon materials. Therefore, it is necessary to research that the discharge capacity and energy density of lithium-sulfur batteries do not decrease even if the carbon material contains fine particles.

### [Prior Art References]

### [Patent Literature]

Korean Patent Laid-open Publication No. 10-2020-0109861

### [Detailed Description of the Invention]

### [Technical Problem]

In order to solve the above problem, the present inventors conducted a multifaceted study and confirmed that the porosity of the positive electrode can be secured even if the porous carbon material prepared by centrifugal grinding having the particle size (based on D10) of less than 10 µm is used as the carbon material of the sulfur-carbon composite as the active material of the positive electrode, and that the discharge capacity and reactivity of the lithium-sulfur battery can be improved accordingly, and the energy density can be secured.

Therefore, the present invention aims to provide a positive electrode for a lithium-sulfur battery in which the discharge capacity and energy density of the lithium-sulfur battery are not degraded even if the particle size (based on D10) of the porous carbon material is less than 10 µm.

Furthermore, the present invention aims to provide a method of manufacturing a positive electrode for a lithium-sulfur battery and a lithium-sulfur battery comprising the same.

### [Technical Solution]

To achieve the above objectives, the present invention provides a positive electrode for a lithium-sulfur battery comprising a current collector; and a positive electrode active material layer disposed on at least one side of the current collector, wherein the positive electrode active material comprises a sulfur-carbon composite comprising a porous carbon material and sulfur on at least some of the inner and outer surfaces of the porous carbon material, wherein the particle size (based on D10) of the porous carbon material is less than 10 µm, wherein the porosity of the positive electrode is more than 75% and 85% or less.

The present invention also provides a method of manufacturing a positive electrode for a lithium-sulfur battery of the present invention, comprising the steps of (1) centrifugal grinding of a porous carbon material to produce a porous carbon material having a particle size (based on D10) of less than 10 µm;
(2) mixing the porous carbon material and sulfur, and heat treating the same to prepare a sulfur-carbon composite;
(3) preparing a positive electrode slurry comprising the sulfur-carbon composite; and
(4) applying the positive electrode slurry to a current collector.

The present invention also provides a lithium-sulfur battery comprising a positive electrode; a negative electrode; a separator interposed between the positive electrode and negative electrode; and an electrolyte.

### [Advantageous Effects]

If the particle size (D10) of the porous carbon material of the sulfur-carbon composite is less than 10 µm, the carbon material blocks the pores of the positive electrode, resulting in a lower porosity of the positive electrode, which in turn reduces the reactivity, discharge capacity, and energy density of the lithium-sulfur battery.

The positive electrode for a lithium-sulfur battery of the present invention can secure the porosity of the positive electrode even if the particle size (D10) of the porous carbon material of the sulfur-carbon composite, which is the positive electrode active material, is less than 10 µm because the tap density of the carbon material is low and does not block the pores of the positive electrode. Therefore, even if the particle size (D10) of the porous carbon material is less than 10 µm, the energy density of the lithium-sulfur battery can be prevented from decreasing and the reactivity of the lithium-sulfur battery can be secured.

### [Best Mode for Practicing the Invention]

Hereinafter, the present invention is described in more detail.

The terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention.

As used herein, the term "composite" means a substance in which two or more materials are combined to form a physically and chemically different phase that expresses a more effective function.

A lithium-sulfur battery uses sulfur as the positive electrode active material and lithium metal as the negative electrode active material. When a lithium-sulfur battery is discharged, an oxidation reaction of lithium occurs at the negative electrode and a reduction reaction of sulfur occurs at the positive electrode. At this time, the reduced sulfur combines with lithium ions transferred from the negative electrode to form lithium polysulfide and finally lithium sulfide.

Lithium-sulfur batteries are attracting attention as the next-generation batteries because they have a much higher theoretical energy density than conventional lithium secondary batteries, and the sulfur used as the positive electrode active material is abundant and inexpensive, which can lower the cost of manufacturing the battery.

Despite these advantages, the low electrical conductivity and the lithium ion conducting property of the positive electrode active material, sulfur, make it difficult to implement the full theoretical energy density in an actual operation.

In order to improve the electrical conductivity of sulfur, sulfur-carbon composites containing sulfur on at least some of the inner and outer surfaces of the porous carbon materials are most often used as positive electrode active materials for lithium-sulfur batteries. However, the discharge capacity and energy density of the lithium-sulfur battery are affected by the particle size of the porous carbon material. The smaller the particle size of the porous carbon material, the more the particles pack the pores of the positive electrode, and the reactivity of the lithium-sulfur battery decreases because the reaction that generates the discharge capacity does not quickly occur. Therefore, it is essential to control the fine particles of porous carbon material in the sulfur-carbon composite, but it is difficult to control the fine particles due to the low density of porous carbon material.

Therefore, the present invention provides a positive electrode for a lithium-sulfur battery that can secure the porosity of the positive electrode by not blocking the pores of the positive electrode even if the porous carbon material contains fine particles.

In the present invention, the fine particles may indicate the particles having a particle size (based on D10) of less than 10 µm.

### Positive electrode for a lithium-sulfur battery

The present invention relates to a positive electrode for a lithium-sulfur battery comprising a current collector; and a positive electrode active material layer disposed on at least one side of the current collector, wherein the positive electrode active material layer comprises a sulfur-carbon composite comprising a porous carbon material and sulfur on at least some of the inner and outer surfaces of the porous carbon material, wherein the particle size (based on D10) of the porous carbon material is less than 10 µm, wherein a porosity or the positive electrode is more than 75% and 85% or less.

The current collector supports the positive electrode active material, and is not particularly limited as long as it has a high conductivity without causing any chemical changes in the battery. For example, copper, stainless steel, aluminum, nickel, titanium, palladium, calcined carbon, copper or stainless steel whose surface is treated with carbon, nickel or silver, or aluminum-cadmium alloy, can be used.

The positive electrode current collector can form microscopic irregularities on its surface to strengthen the binding with the positive electrode active material. Accordingly, various forms such as films, sheets, foils, meshes, nets, porous materials, foams, non-woven materials, etc. can be used.

The positive electrode active material layer is disposed on at least one side of the current collector, and may include a sulfur-carbon composite comprising a porous carbon material as the positive electrode active material and sulfur on at least some of the inner and outer surfaces of the porous carbon material.

The sulfur may be at least one selected from the group consisting of inorganic sulfur (S₈), Li-Sₙ (wherein n≥1), organic sulfur compounds and carbon-sulfur polymers [(C₂Sₓ)ₙ, wherein x is 2.5 to 50, and n≥2]. Preferably, inorganic sulfur (Ss) may be used.

Furthermore, the sulfur is located on the surface as well as inside the pores of the porous carbon material, wherein it may be present in an area of less than 100% of the outer total surface of the porous carbon material, preferably 1 to 95%, more preferably 60 to 90%. When the sulfur is within the range on the surface of the porous carbon material, it can have a maximum effect in terms of electron transfer area and wettability of the electrolyte. Specifically, in the above range, the sulfur is thinly and evenly impregnated on the surface of the porous carbon material, which can increase the electron transfer contact area during the charging and discharging process. If the sulfur is located in 100% of the surface of the porous carbon material, the porous carbon material is completely covered with sulfur, which reduces the wettability of the electrolyte and reduces the contact with the conductive material contained in the electrode, which cannot receive electron transfer and participate in the reaction.

The porous carbon material may be generally prepared by carbonizing a precursor of various carbon materials. The porous carbon material includes nonuniform pores inside, wherein the average diameter of the pores is in the range of 1 to 200 µm, and the porosity may be in the range of 10 to 90% of the total volume of the porous carbon material. If the average diameter of the pores is less than the above range, the impregnation of sulfur is not possible because the pore size is only at the molecular level, and conversely, if it exceeds the above range, the mechanical strength of the porous carbon material is weakened and is undesirable for application in the manufacturing process of the electrode.

The shape of the porous carbon material can be spherical, rod, acicular, plate, tube, or bulk, as long as it is conventionally used in lithium-sulfur batteries.

The porous carbon material may be any material conventionally used in the art that has a porous structure or high specific surface area. For example, the porous carbon materials may be one selected from the group consisting of graphite; graphene; carbon black such as denka black, acetylene black, ketjen black, channel black, furnace black, lamp black or thermal black; carbon nanotube (CNT) such as single-walled carbon nanotube (SWCNT) or multi-walled carbon nanotube (MWCNT); carbon fiber, such as graphite nanofiber (GNF), carbon nanofiber (CNF), or activated carbon fiber (ACF); graphite, such as natural graphite, artificial graphite, or expanded graphite; and activated carbon. Preferably, the porous carbon material may be carbon nanotube.

In the present invention, the particle size (based on D10) of the porous carbon material of the sulfur-carbon composite may be less than 10 µm. Previously, when the porous carbon material of the sulfur-carbon composite contains fine particles, the fine particles block the pores of the positive electrode, reducing the porosity of the positive electrode, making it difficult to secure the reactivity of the lithium-sulfur battery, and reducing the discharge capacity and energy density. In other words, the discharge capacity and energy density of the lithium-sulfur battery are affected by the particle size of the porous carbon material. In the present invention, the porosity of the positive electrode can be secured even if the porous carbon material has a particle size (based on D10) of less than 10 µm, so that it can have a discharge capacity, energy density, and reactivity equivalent to those of a lithium-sulfur battery containing a porous carbon material that does not contain fine particles. Therefore, the positive electrode for a lithium-sulfur battery and the lithium-sulfur battery comprising the same of the present invention are not affected by the particle size of the porous carbon material, and there is no need to control the particle size of the porous carbon material.

The porous carbon material having a particle size (based on D10) of less than 10 µm may be prepared by using centrifugal grinding. The centrifugal grinding may be such that the larger particles are crushed against the blades of a centrifugal mill to produce smaller particles. For example, a carbon nanotube particle having a plurality of carbon nanotube strands entangled with each other may be pulverized into small particles by breaking the entangled spaces between the carbon nanotubes by the blades of the pulverizer. As the plurality of carbon nanotube strands that are entangled with each other are broken, the degree of entanglement is reduced, and thus a low tap density can be exhibited. Specifically, the tap density of the porous carbon material having a particle size (based on D10) of less than 10 µm prepared by the above centrifugal grinding may be 0.01 to 0.1 g/cc, and preferably 0.03 to 0.07 g/cc. Therefore, the positive electrode may have a high porosity even if the particle size (based on D10) of the porous carbon material is less than 10 µm. However, the tap density of the porous carbon material having a particle size (based on D10) of less than 10 µm, which is not prepared by centrifugal grinding, exceeds 0.1 g/cc, and the high tap density may block the pores of the positive electrode, making it impossible to provide a positive electrode with a high porosity, and the reactivity of the lithium-sulfur battery may be reduced.

The sulfur-carbon composite may comprise 70 to 90% by weight, preferably 70 to 85% by weight, more preferably 72 to 80% by weight, of the sulfur, based on 100% by weight of the sulfur-carbon composite. When the content of the sulfur is below the aforementioned range, the content of the binder in the manufacture of the positive electrode increases due to the relatively higher content of porous carbon material in the sulfur-carbon composite, which increases the specific surface area. This increased use of binder may eventually increase the surface resistance of the positive electrode and act as an insulator that prevents electron passage, thereby reducing the performance of the battery. Conversely, if the content of sulfur exceeds the aforementioned range, the sulfurs that fail to bind to the porous carbon material may clump among themselves or re-elute to the surface of the porous carbon material, making it difficult to receive electrons and participate in electrochemical reactions, resulting in a loss of capacity of the battery.

Furthermore, the positive electrode active material may be comprised in an anmount of 70 to 95% by weight, preferably 75 to 90% by weight, more preferably 80 to 90% by weight, with respect to the total weight of the positive electrode active material layer. If the positive electrode active material is less than 70% by weight, the battery performance may be reduced, and if it is more than 95% by weight, the content of conductive material and binder other than the positive electrode active material may be relatively reduced, resulting in reduced properties such as conductivity, durability, and securing a lithium ion delivery path.

Moreover, the sulfur may comprise 65 to 80% by weight, preferably 67 to 75% by weight, of the total weight of the positive electrode active material layer. If the sulfur content is less than 65% by weight, the energy density of the lithium-sulfur battery cannot be secured due to insufficient positive electrode active material, and if the sulfur is greater than 80% by weight, the content of the conductive material and binder is relatively reduced, and the properties such as conductivity, durability, and securing a lithium ion transfer path may be reduced.

The positive electrode active material layer may further comprise a conductive material or a binder.

The conductive material is a material that electrically connects the electrolyte and the positive electrode active material and serves as a pathway for electrons to move from the current collector to the positive electrode active material, and can be used without restriction as long as it does not cause any chemical changes in lithium-sulfur batteries and has porosity and conductivity.

For example, a porous carbon-based material can be used as the conductive material, wherein the carbon-based material is carbon black (CB), graphite, graphene, activated carbon, carbon nano tube (CNT), or carbon fiber; or metallic fiber such as metal mesh; metallic powder such as copper, silver, nickel or aluminum; or organic conductive material such as polyphenylene derivative. These conductive materials may be used alone or in combination.

Currently commercially available products as a conductive material include acetylene black-based series (such as Chevron Chemical Company or Gulf Oil Company), Ketjen Black EC series (Armak Company), Vulcan XC-72 (Cabot Company), and Super P (MMM). For example, they may include acetylene black, carbon black, and graphite.

The conductive material may be comprised in an amount of 1 to 20% by weight, preferably 3 to 18% by weight, more preferably 5 to 15% by weight, based on the total weight of the positive electrode active material layer. If the conductive material is included in less than 1% by weight, the conductivity of the positive electrode cannot be secured, and if it is included in more than 20% by weight, the content of the positive electrode active material and the binder is relatively reduced, and the battery performance may be reduced.

The binder serves to retain the positive electrode active material in the positive electrode current collector and to provide a connection between the positive electrode active materials. Such binder include may include at least one selected from the group consisting of, for example, styrene-butadiene rubber, carboxyl methyl cellulose, poly(vinyl acetate), polyvinyl alcohol, polyethylene oxide, polyvinylpyrrolidone, alkylated polyethylene oxide, crosslinked polyethylene oxide, polyvinyl ether, poly(methyl methacrylate), polyvinylidene fluoride, copolymer of polyhexafluoropropylene and polyvinylidene fluoride (Trade name: Kynar), poly(ethylacrylate), polytetrafluoroethylene, polyvinyl chloride, polyacrylonitrile, polyvinylpyridine, polystyrene, polyacrylic acid, derivatives, blends, and copolymers thereof.

The binder may be comprised in an amount of 1 to 20% by weight, preferably 3 to 18% by weight, more preferably 5 to 15% by weight, relative to the total weight of the positive electrode active material layer. If the binder is less than 1 % by weight, the adhesion between the positive electrode active materials or between the positive electrode active material and the current collector can be significantly reduced, and if the binder is more than 20% by weight, the capacity of the battery can be reduced.

The porosity of the positive electrode for a lithium-sulfur battery of the present invention may be more than 75% and 85% or less. That is, the positive electrode for a lithium-sulfur battery of the present invention may have a porosity more than 75% and 85% or less even if the particle size (based on D10) of the porous carbon material of the sulfur-carbon composite is less than 10 µm. Therefore, the lithium-sulfur battery comprising the same does not show a decrease in reactivity and can maintain its reactivity.

If the porosity of the positive electrode is 75% or less, it does not contain enough pores to provide a lithium-sulfur battery with excellent reactivity, and if the porosity of the positive electrode is more than 85%, the increase in energy density of the lithium-sulfur battery is limited. In addition, the electrolyte may not be present in all the pores of the positive electrode, so there may be pores of the positive electrode that are not utilized for the reaction, resulting in a loss of positive electrode active material.

### Method of manufacturing a positive electrode for a lithium-sulfur battery

The present invention also relates to a method of manufacturing a positive electrode for a lithium-sulfur battery, which comprises the steps of:
(1) centrifugal grinding of porous carbon material to produce porous carbon material with a particle size (based on D10) of less than 10 µm;
(2) mixing the porous carbon material and sulfur, and heat treating the same to prepare a sulfur-carbon composite;
(3) preparing a positive electrode slurry comprising the sulfur-carbon composite; and
(4) applying the positive electrode slurry to the current collector.

Step (1) is to centrifugal grind the porous carbon material to produce a porous carbon material having a particle size (based on D10) of less than 10 µm.

The porous carbon material is as described above.

The centrifugal grinding may be done at a speed of 6000 to 18000 rpm and a linear velocity of 80 to 200 m/s, and preferably at a speed of 6000 to 18000 rpm and a linear velocity of 90 to 160 m/s.

Specifically, the centrifugal grinding may control the particle size of the porous carbon material by adjusting the mesh size of a sieve provided in the centrifugal grinder after centrifuging the porous carbon material at the rpm and linear speed. Furthermore, the particle size of the porous carbon material can be adjusted by conducting a cyclone process when capturing the porous carbon material that has further passed through the sieve. The porous carbon material obtained by the above process may be a porous carbon material having a particle size (based on D10) of less than 10 µm.

As described above, by grinding the porous carbon material through the centrifugal grinding, the porous carbon material having a particle size (based on D10) of less than 10 µm may have a low tap density. Specifically, the tap density of the porous carbon material may be 0.01 to 0.1 g/cc, preferably 0.03 to 0.07 g/cc. On the other hand, if the porous carbon material is not prepared by centrifugal grinding, the tap density may exceed 0.1 g/cc even if the particle size (based on D10) of the porous carbon material is less than 10 µm. Therefore, the positive electrode for a lithium-sulfur battery of the present invention can have a high porosity even if the particle size (D10) of the porous carbon material is less than 10 µm. On the other hand, porous carbon material that is not prepared by centrifugal grinding may block the pores of the positive electrode due to its high tap density, making it impossible to prepare a positive electrode with high porosity.

Step (2) is to mix the porous carbon material and sulfur, and heat treat the same to prepare a sulfur-carbon composite.

The porous carbon material having a particle size (based on D10) of less than 10 µm prepared in step (1) is mixed with sulfur, wherein the mixing may be a simple mixing.

Furthermore, the heat treatment can be carried out at a temperature of 130 °C to 170 °C, and the heat treatment time is not particularly limited, but can be carried out for 15 minutes to 2 hours. If the temperature range exceeds 170 °C, there is a problem that the sulfur is vaporized, and if it is below 130 °C, there is a problem that the sulfur is not dissolved and is not evenly distributed. In addition, if the heat treatment time is less than 15 minutes, there is a problem that it is not sufficiently melted and impregnated, and if it exceeds 2 hours, some of the sulfur is vaporized or impregnated unevenly.

Step (3) is to prepare a positive electrode slurry comprising the sulfur-carbon composite prepared in step (2).

The positive electrode slurry may form a positive electrode active material layer. The positive electrode slurry may comprise a sulfur-carbon composite as the positive electrode active material, and may further comprise a binder or conductive material. The binder or conductive material may be as described above.

Further, the positive electrode slurry may comprise a solvent to make uniform dispersion of the sulfur-carbon composite. As such a solvent, water is most preferred as an aqueous solvent, wherein the water may be distilled, or deionized water. However, it is not necessary to be limited to this, and if necessary, lower alcohols that are readily miscible with water may be used. Such lower alcohols include methanol, ethanol, propanol, isopropanol, and butanol, which are preferably miscible with water.

The solvent may be contained at a level having a concentration sufficient to facilitate application of the positive electrode slurry to the current collector, and the specific content is dependent on the application method and device.

The positive electrode slurry may further comprise, as necessary, substances conventionally used in the art for the purpose of improving its functionality. For example, it may include viscosity modifier, fluidizing agent, or filler.

Step (4) is to apply the positive electrode slurry prepared in step (3) to the current collector.

The method of applying the positive electrode slurry to the current collector is not particularly limited by the present invention, and may include, for example, doctor blade, die casting, comma coating, and screen printing. Additionally, the positive electrode slurry may be applied to the current collector by pressing or lamination methods after being molded onto a separate substrate.

After step (4), a drying process may be performed to remove solvent from the positive electrode slurry. The drying process is performed at a temperature and time at a level sufficient to remove the solvent, and the conditions may vary depending on the type of solvent, and are therefore not particularly limited to the present invention. Examples include drying by warm air, hot air, or low humidity air, vacuum drying, and irradiation with (far) infrared or electromagnetic radiation. The drying speed is usually adjusted to remove the solvent as quickly as possible within a speed range that does not cause the positive electrode active material layer to crack or the positive electrode active material layer to be delaminated from the positive electrode current collector due to stress concentration.

Additionally, the density of the positive electrode active material in the positive electrode may be increased by pressing the current collector after the drying. Pressing methods include, for example, mold pressing and roll pressing.

The porosity of the positive electrode for a lithium-sulfur battery produced by the above method may be more than 75% and 85% or less. In general, if the particle size (based on D10) of the porous carbon material is less than 10 µm, the fine particles of the porous carbon material block the pores of the positive electrode, making it impossible to produce a positive electrode with a high porosity. However, by centrifugally grinding the porous carbon material in step (1), the porosity of the positive electrode for a lithium-sulfur battery can be made to be more than 75% and 85% or less even if the porous carbon material has a particle size (based on D10) of less than 10 µm.

Thus, the present invention can provide a method for manufacturing a positive electrode for a lithium-sulfur battery in which the porosity of the positive electrode is not affected by the fine particles of the porous carbon material.

### Lithium-sulfur battery

The present invention relates to a lithium-sulfur battery comprising a positive electrode; a negative electrode; a separator interposed between the positive electrode and negative electrode; and an electrolyte.

The positive electrode may be a positive electrode for a lithium-sulfur battery of the present invention as described above.

The negative electrode may comprise a current collector and a negative electrode active material layer applied to one or both sides of the current collector. Alternatively, the negative electrode may be a lithium metal plate.

The current collector is for the support of the negative electrode active material layer and may be the same as the description of the current collector used for the positive electrode above.

The negative electrode active material layer may include, in addition to the negative electrode active material, a conductive material and a binder. The conductive material and binder are as described above.

The negative electrode active material may include a material capable of reversibly intercalating or deintercalating lithium ions (Li⁺), a material capable of reacting with lithium ions to reversibly form a lithium-containing compound, a lithium metal, or a lithium alloy.

The material into which the lithium ions (Li⁺) can be reversibly inserted or removed can be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of lithium metal thin film or lithium metal powder.

A separator may be interposed between the positive electrode and negative electrode.

The separator may consist of any porous non-conductive or insulating material without particular limitation as long as it separates or insulates the positive electrode and the negative electrode from each other and enables the transport of lithium ions between the positive electrode and the negative electrode, and is one conventionally used as a separator in lithium secondary batteries. Such a separator may be an independent member, such as a film, or a coating layer added to the positive electrode and/or the negative electrode.

Preferably, the separator has a low resistance to ionic migration of the electrolyte and an excellent wetting capacity for the electrolyte.

The separator may comprise a porous substrate, which may be any porous substrate conventionally used in secondary batteries, and may comprise a porous polymeric film either alone or laminated therewith, for example, a nonwoven or polyolefin-based porous membrane consisting of high melting point glass fibers, or polyethylene terephthalate fibers, but not limited thereto.

The material of the porous substrate is not particularly limited by the present invention, but any porous substrate conventionally used in electrochemical devices can be used. For example, the porous substrate may include one or more materials selected from the group consisting of a polyolefin such as polyethylene or polypropylene, a polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidenefluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not limited to the aforementioned range, if the thickness is excessively thinner than the aforementioned lower limit, the mechanical properties may be degraded and the separator may be easily damaged during use of the battery.

The average diameter and porosity of the pores present in the porous substrate are also not particularly limited, but may be 0.001 to 50 µm and 10 to 95%, respectively.

The electrolyte includes lithium ions, and is used to cause electrochemical oxidation or reduction reaction at the positive electrode and the negative electrode.

The electrolyte can be a non-aqueous electrolyte or a solid electrolyte that does not react with the lithium metal, but is preferably a non-aqueous electrolyte, and includes an electrolyte salt and an organic solvent.

The electrolyte salt included in the non-aqueous electrolyte is a lithium salt. The lithium salt may be any lithium salt conventionally used in electrolytes for lithium secondary batteries. For example, LiCI, LiBr, Lil, LiClO₄, LiBF₄, LiB₁₀Cl₁₀, LiPF₆, LiCF₃SO₃, LiCF₃CO₂, LiAsF₆, LiSbF₆, CH₃SO₃Li, (CF₃SO₂)₂NLi, LiN(SO₂F)₂, lithium chloroborane, low aliphatic lithium carbonate, lithium tetraphenylborate, or lithium imide may be used.

The concentration of the lithium salt may be 0.2 to 2 M, particularly 0.4 to 2 M, more particularly 0.4 to 1.7 M, depending on several factors such as the exact composition of the electrolyte solvent mixture, the solubility of the salt, the conductivity of the dissolved salt, the charging and discharging conditions of the battery, the working temperature and other factors known in the field of lithium batteries. If the concentration of the lithium salt is below 0.2 M, the conductivity of the electrolyte may decrease, resulting in a decrease in electrolyte performance, and if it is above 2 M, the viscosity of the electrolyte may increase, resulting in a decrease in the mobility of the lithium ions.

As the organic solvent included in the non-aqueous electrolyte, those conventionally used in electrolytes for lithium secondary batteries can be used without limitation, such as each alone or a mixture of two or more of ether, ester, amide, linear carbonate, and cyclic carbonate. Among them, representative examples include ether-based compounds.

The ether-based compounds may include acyclic and cyclic ethers.

For example, the acyclic ethers may include at least one selected from the group consisting of, but are not limited to, dimethyl ether, diethyl ether, dipropyl ether, methyl ethyl ether, methyl propyl ether, ethyl propyl ether, dimethoxyethane, diethoxyethane, ethylene glycol ethylmethyl ether, diethylene glycol dimethyl ether, diethylene glycol diethyl ether, diethylene glycol monomethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ethers may include at least one selected from the group consisting of, but are not limited to, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methylfuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene, and isosorbide dimethyl ether.

The ester among the organic solvents may include any one or a mixture of two or more selected from the group consisting of, but is not limited to, methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone.

Specific examples of the linear carbonate compounds may include, but are not limited to, any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more thereof.

Further, specific examples of the cyclic carbonate compounds include any one or a mixture of two or more selected from the group consisting of, but are not limited to, ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof. The halides include, for example, but are not limited to, fluoroethylene carbonate (FEC).

The electrolyte may further comprise a nitric acid or a nitrite-based compound as an additive in addition to the aforementioned electrolyte salts and organic solvents. The nitric acid or nitrite-based compound has the effect of forming a stable film on the lithium metal electrode, which is the negative electrode, thereby improving the charge and discharge efficiency.

Such nitric or nitrite-based compounds include at least one selected from the group consisting of, but are not limited to, inorganic nitric or nitrite compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNOz), potassium nitrite (KNO₂), cesium nitrite (CsNOz), ammonium nitrite (NH₄NO₂); organic nitric acid or nitrite compounds such as methyl nitrate, dialkyl imidazolium nitrate, guanidine nitrate, imidazolium nitrate, pyridinium nitrate, ethyl nitrate, propyl nitrate, butyl nitrate, pentyl nitrate, or octyl nitrate; organic nitro compounds such as nitromethane, nitropropane, nitrobutane, nitrobenzene, dinitrobenzene, nitropyridine, dinitropyridine, nitrotoluene, dinitrotoluene, and combinations thereof, preferably lithium nitrate.

Depending on the manufacturing process and the required properties of the final product, the injection of the electrolyte can take place at an appropriate stage during the manufacturing process of the electrochemical device, e.g. before the electrochemical device assembly or at the final stage of the electrochemical device assembly.

The lithium secondary battery according to the present invention is capable of lamination, stacking, and folding of the separator and electrodes, in addition to winding, which is a common process.

The shape of the lithium secondary battery is not particularly limited, and can be cylindrical, stacked, coin-shaped, or other shapes.

### [Mode for Practicing the Invention]

Hereinafter, preferred embodiments are presented to facilitate understanding of the present invention, but it would be apparent to those skilled in the art that the following embodiment is only an example of the present invention, and that various changes and modifications are possible within the scope of the present invention and the technical idea, and that such changes and modifications fall within the scope of the appended patent claims.

### Examples 1 to 5. Preparation of positive electrode for lithium-sulfur battery

The carbon nanotubes were injected into a centrifugal mill (CSM, Netzsch) to produce carbon nanotubes with a particle size (D10) of less than 10 µm. The carbon nanotubes were mixed with sulfur (Sigma-Aldrich) and heat treated at 155 °C for 30 min to prepare sulfur-carbon composite (S:CNT=70:30).

The sulfur-carbon composite and binder were mixed in a weight ratio of 96:4 and added to the solvent, DI water, to prepare a positive electrode slurry.

The positive electrode for a lithium-sulfur battery was prepared by coating the positive electrode slurry on a 20 µm thick aluminum foil current collector and drying it at a temperature of 80 °C for 2 hours.

In Examples 1 to 5, the carbon nanotubes were ground by varying the rpm and linear speed of the centrifugal grinding, and the rpm, linear speed, particle size of the carbon nanotubes (based on D10), porosity of the positive electrodes, and tap density of the carbon nanotubes are shown in the following Table 1.

**[Table 1]**

| | Centrifuge rpm | Linear speed | Carbon nanotube particle size (based on D10) | Positive electrode porosity | Tap density |
|---|---|---|---|---|---|
| Example 1 | 18000 | 94.2 m/s | 7 µm | 83.2 % | 0.07 g/cc |
| Example 2 | 6000 | 94.2 m/s | 9.41 µm | 83% | 0.08 g/cc |
| Example 3 | 12000 | 92.8 m/s | 7.96 µm | 78.8 % | 0.04 g/cc |
| Example 4 | 8000 | 126 m/s | 9.22 µm | 75.2 % | 0.08 g/cc |
| Example 5 | 10000 | 157 m/s | 8.36 µm | 76.7 % | 0.06 g/cc |

The carbon nanotubes of Examples 1 to 5 comprise fine particles having a particle size (based on D10) of less than 10 µm, and have a tap density of 0.01 to 0.1 g/cc, and a porosity of the positive electrodes is more than 75% even with the fine particles.

### Comparative Examples 1 to 3. Preparation of positive electrode for lithium-sulfur battery

Sulfur-carbon composites (S:CNT=70:30) were prepared by mixing carbon nanotubes and sulfur (Sigma-Aldrich) and heat treating the same at 155 °C for 30 min.

The sulfur-carbon composite and binder were mixed in a weight ratio of 96:4 and added to the solvent, DI water, to prepare the positive electrode slurry.

The positive electrode for a lithium-sulfur battery was prepared by coating the positive electrode slurry on a 20 µm thick aluminum foil current collector and drying it at a temperature of 80 °C for 2 hours.

In Comparative Examples 1 to 3, the carbon nanotubes were not centrifuged, and positive electrodes for lithium-sulfur battery were prepared by using carbon nanotubes with different particle sizes (D10), and the particle size (D10) of the carbon nanotubes and the porosity of the positive electrodes are shown in Table 2 below.

**[Table 2]**

| | Carbon nanotube particle size (based on D10) | Positive electrode porosity | Tap density |
|---|---|---|---|
| Comparative Example 1 | 14.32 µm | 80% | 0.11 g/cc |
| Comparative Example 2 | 5.4 µm | 72% | 0.12 g/cc |
| Comparative Example 3 | 4.24 µm | 71% | 0.18 g/cc |

In Comparative Example 1, the particle size of the carbon nanotubes (based on D10) exceeded 10 µm, and the porosity of the positive electrode exceeded 75%, but the tap density exceeded 0.1 g/cc.

Comparative Examples 2 and 3 showed that the particle size (based on D10) of the carbon nanotubes was less than 10 µm, so that the particles blocked the pores of the positive electrode, resulting in a porosity of the positive electrode of 75% or less, and a tap density of over 0.1 g/cc.

### Experimental Example 1. Measurement of the discharge capacity and relative energy density of lithium-sulfur battery

Lithium-sulfur batteries were prepared by using the positive electrodes of Examples 1 to 5 and Comparative Examples 1 to 3, respectively.

Specifically, a lithium-sulfur battery was prepared by positioning the positive electrode and the negative electrode to face each other, interposing porous polyethylene as a separator between them, and injecting an electrolyte solution.

Lithium metal was used as the negative electrode, and a mixture solution in which 1 M concentration of LiTFSI and 3% by weight lithium nitrate (LiNO₃) was dissolved in an organic solvent consisting of 2-methylfuran and dimethoxyethane (33:77 (volume ratio)) was used as the electrolyte.

Each of the lithium-sulfur batteries of Examples 1 to 5 and Comparative Examples 1 to 3 was discharged to 1.8 V with a constant current of 0.5 C in CC mode at 25 °C, and charged to 2.5 V with a constant current of 0.2 C to measure the discharge capacity.

Furthermore, the relative energy density of each of the lithium-sulfur batteries of Examples 1 to 5 and Comparative Examples 1 to 3 was measured, and the discharge capacity and relative energy density are shown in Table 3 below. The relative energy density was calculated based on Comparative Example 2.

**[Table 3]**

| | Carbon nanotube particle size (based on D10) | Positive electrode porosity | Tap density | Discharge capacity (0.5C 3^{rd}) | Relative energy density |
|---|---|---|---|---|---|
| Example 1 | 7 µm | 83.2% | 0.07 g/cc | 1129 mAh | 1.12 |
| Example 2 | 9.41 µm | 83% | 0.08 g/cc | 1084 mAh | 1.13 |
| Example 3 | 7.96 µm | 78.8% | 0.04 g/cc | 1110 mAh | 1.16 |
| Example 4 | 9.22 µm | 75.2% | 0.08 g/cc | 1131 mAh | 1.12 |
| Example 5 | 8.36 µm | 76.7% | 0.06 g/cc | 1115 mAh | 1.15 |
| Comparative Example 1 | 14.32 µm | 80% | 0.11 g/cc | 1119 mAh | 1.12 |
| Comparative Example 2 | 5.4 µm | 72% | 0.12 g/cc | 976 mAh | 1 |
| Comparative Example 3 | 4.24 µm | 71% | 0.18 g/cc | 1021 mAh | 1.02 |

From the results in Table 3, based on Comparative Example 1 in which the particle size (based on D10) of the carbon nanotube exceeds 10 µm, Examples 1 to 5 of the present invention were able to produce positive electrodes with a porosity exceeding 75% since the tap density was low to 0.01 to 0.1 g/cc even when the particle size (based on D10) of the carbon nanotubes is less than 10 µm, thereby showing equal or superior results in discharge capacity and relative energy density compared to Comparative Example 1.

In Comparative Examples 2 and 3, the particle size of the carbon nanotubes (based on D10) was less than 10 µm, but the tap density exceeded 0.1 g/cc due to not conducting a centrifugal grinding, and the positive electrode with a porosity exceeding 75% could not be prepared. Therefore, the discharge capacity and relative energy density were very low.

Therefore, it can be seen that centrifugal grinding of the porous carbon material can ensure the porosity of the positive electrode even if the particle size of the porous carbon material (based on D10) is less than 10 µm, and can improve the discharge capacity and relative energy density of the lithium-sulfur battery.

## Claims

1. A positive electrode for a lithium-sulfur battery comprising:
a current collector; and
a positive electrode active material layer disposed on at least one side of the current collector,
wherein the positive electrode active material layer comprises a sulfur-carbon composite comprising a porous carbon material and sulfur on at least some of the inner and outer surfaces of the porous carbon material,
wherein the particle size (based on D10) of the porous carbon material is less than 10 µm, and
wherein the porosity of the positive electrode is more than 75% and 85% or less.

2. The positive electrode for a lithium-sulfur battery according to claim 1, wherein the sulfur is comprised in an amount of 65% by weight to 80% by weight, relative to the total weight of the positive electrode active material layer.

3. The positive electrode for a lithium-sulfur battery according to claim 1, wherein the porous carbon material has a tap density of 0.01 to 0.1 g/cc.

4. The positive electrode for a lithium-sulfur battery according to claim 1, wherein the positive electrode active material layer further comprises a binder or conductive material.

5. A method of manufacturing a positive electrode for a lithium-sulfur battery according to any one of claims 1 to 4, comprising the steps of:
(1) centrifugal grinding of a porous carbon material to produce a porous carbon material with a particle size (based on D10) of less than 10 µm;
(2) mixing the porous carbon material and sulfur, and heat treating the same to prepare a sulfur-carbon composite;
(3) preparing a positive electrode slurry comprising the sulfur-carbon composite; and
(4) applying the positive electrode slurry to a current collector.

6. The method of manufacturing a positive electrode for a lithium-sulfur battery according to claim 5, wherein step (1) is to centrifugal grind at 6000 to 18000 rpm and a linear speed of 80 to 200 m/s.

7. The method of manufacturing a positive electrode for a lithium-sulfur battery according to claim 5, wherein the positive electrode has a porosity of more than 75% and 85% or less.

8. A lithium-sulfur battery comprising a positive electrode according to any one of claims 1 to 4; a negative electrode; a separator interposed between the positive electrode and negative electrode; and an electrolyte.
